# EUROPEAN PATENT APPLICATION

(11) **EP 1 852 160 A1**
(43) Date of publication of application: **07.11.2007**
(21) Application number: 06712889.2
(22) Date of filing: 02.02.2006
(51) Int. Cl.: A63F 13/00, A63F 13/12, G08B 23/00

(54) **UNFAIR CONDUCT PREVENTING METHOD AND APPARATUS**

(30) Priority: 16.02.2005 JP 2005039884
(71) Applicant: Konami Digital Entertainment Co., Ltd., Minato-ku Tokyo 107-8324 (JP)
(72) Inventor: KUBOTA, Kazutaka c/o Konami Dig.Enter.Co.,Ltd., Tokyo 1078324 (JP); KONISHI, Kazuma c/o Konami Dig.Enter.Co.,Ltd., Tokyo 1078324 (JP); HARANO, Yuuki c/o Konami Dig.Enter.Co.,Ltd., Tokyo 1078324 (JP); ADACHI, Yoshitaka c/o Konami Dig.Enter.Co.,Ltd., Tokyo 1078324 (JP); UCHIYAMA, Satoshi c/o Konami Dig.Enter.Co.,Ltd., Tokyo 1078324 (JP); SHIBAMIYA, Masakazu c/o Konami Dig.Enter.Co.,Ltd., Tokyo 1078324 (JP)
(74) Representative: Driver, Virginia Rozanne
(86) International application number: PCT/JP2006/301746
(87) International publication number: WO 2006/087916

(57) **Abstract**

In the present invention, a start count Ns of a game and an end count of a game finished properly Ne are compared. When the two do not agree a predetermined number of times, an error signal is generated. Based on this error signal, the game machine outputs an error display and an alarm sound to alert that an unauthorized conduct has been committed. Also, it is possible to give a penalty in a game played in the future based on the generated error signal.

## Description

### BACKGROUND OF THE INVENTION

### Field of the Invention

The present invention relates to a method and a machine for preventing unauthorized conduct during game play.

### Related Art

It is now commonplace to calculate a ranking of the nationwide or on-site players based on a game performance of each player by connecting game machines via a network and collecting game performances at a host. The calculated ranking is displayed on the game machine at the end of a game. The better a player's game performance is, the higher a player ranks.

Therefore, the player tries to achieve a better game performance in order to be ranked as high as possible. Such a desire may cause circumstances in which the player tries to prevent the game performance from being transmitted to the host in order to prevent his/her ranking from dropping when the game performance is not satisfactory. The player may try to prevent the game performance from being transmitted to the host before the game ends when the game is likely to end up with an undesirable result.

An example of such a case may be where the game performance is prevented from being transmitted to the host by turning off a power switch of the game machine thus stopping the game coercively. Such a conduct is committed in order to invalidate the game and to prevent the game performance from being recorded in the host by creating an abnormal termination of the game when the game develops unfavorably for the player.

When the unfavorable game performance is prevented from being transmitted by such conduct, the ranking of the player who committed that conduct will not drop. Therefore, an accurate ranking based on accurate game performances cannot be made Thus, creating unfairness in a ranking between the players who committed an unauthorized conduct and the other players.

### SUMMARY OF THE INVENTION

An object of the present invention is to prevent transmission of only favorable game performances to the host.

According to a first aspect of the present invention, an unauthorized conduct prevention method is provided that is performed by a game machine, that is connected to another game machine via a network and executes an online competitive game. The method includes:
accepting an input of a player identifier that identifies a player who operates the game machine;
detecting, for each player identifier, an abnormal count that indicates the total number of times that the online competitive game was not terminated properly at the game machine; and generating an error signal based on the abnormal count.

The unauthorized conduct prevention method of the present invention is executed by the game machine that comprises a game system. The game system includes game machines and a host. Each game machine is connected via an internal network such as a LAN and an external network such as the Internet and executes the online competitive game. In addition, each game machine transmits a game performance to the host. The game performance is accumulated by the host and a player's ranking is computed based thereon. The computed result is transmitted from the host to the game machine in response to a request from the game machine. In this way, a player operating each game machine can confirm his/her current ranking every time a game is finished.

A case where the online competitive game is not terminated properly, namely, an abnormal termination, includes the one that is committed intentionally and the one that happens accidentally. The intentional abnormal termination may include, for example, a termination by the player pulling a LAN cable from the game machine and a termination by the player switching the game machine off. The accidental abnormal termination may include, for example, a termination where the communication between the game machine and the center server 1 is interrupted because the Internet is busy.

In the present invention, when an abnormal count is high, the error signal is generated assuming that the player has committed an unauthorized conduct several times whereby the intentional abnormal termination has occurred. Because the accidental abnormal termination does not occur so frequently, it can be assumed that it is highly probable that the abnormal termination has been committed intentionally when the abnormal count is overly high. Outputting an error notification and forbidding starting the game after generating the error signal may serve as deterrents to future unauthorized conduct.

Note that some kind of penalty may be given to a player who has committed an unauthorized conduct. By giving the penalty, it is expected that unauthorized conduct is prevented effectively. For example, it is conceivable that the host deducts a point from accumulated acquired points that indicate the game performance and lowers the ranking.

According to a second aspect of the present invention, in the unauthorized conduct prevention method according to the first aspect, the generation step determines whether or not the abnormal count has exceeded a predetermined maximum value and, if it has, generates the error signal.

The abnormal count includes a count of both the intentional abnormal termination and the accidental abnormal termination. However, if the abnormal count is overly high, it can be determined that a count of the intentional abnormal termination constitutes the majority thereof. Therefore, when the abnormal count exceeds a predetermined maximum value, the error signal may be generated assuming that the intentional abnormal termination has occurred a considerable number of times.

Alternatively, the intentional abnormal termination may be determined when it is detected that the player pulls out a LAN cable or switches off the game machine before the transmission of the game performance is completed.

For example, the pull-out of the LAN cable may be detected as follows. A response request is transmitted to a router on the LAN, and if there is no response after a predetermined time has passed in response to the response request, it is determined that some kind of communication failure has occurred in the external network or in the internal network. At this time, if the response request is transmitted to the router on the internal network but the transmission does not complete within a predetermined time period, it can be determined that a communication failure has occurred in the internal network. And it may be assumed that this communication failure in the internal network is due to the pull-out of the LAN cable. Conversely, because the response comes back from the router if a communication failure has occurred in the external network, it is possible to distinguish it from the communication failure in the internal network.

According to a third aspect of the present invention, the unauthorized conduct prevention method according to the first aspect further comprises the step of outputting an error notification based on the error signal generated in the error signal generation step.

When it can be determined that the abnormal termination is intentional, the error display and an alarm sound are outputted. This embarrasses the player thus preventing further unauthorized conduct.

According to a fourth aspect of the present invention, in the unauthorized conduct prevention method according to the third aspect, the error processing step forbids an execution of the online competitive game based on the error signal.

Unauthorized conduct can possibly be deterred by giving a penalty by which a game cannot be continued when it is determined that an unauthorized conduct has been committed. The execution of the online competitive game may be forbidden until a predetermined period of time passes after the error signal is generated.

According to a fifth aspect of the present invention, in the unauthorized conduct prevention method according to any of the first aspect to the fourth aspect, the game machine is connected to a host via the network, and the detection step has the steps of:
acquiring a start count and an end count that correspond to the player identifier accepted in the identification step from the host,
and calculating the abnormal count by computing a difference between the acquired start count and end count.
Here, the start count indicates the total number of times that a player identified by the player identifier started the online competitive game; and the end count indicates the total number of times that the player identified by the player identifier terminated the online competitive game properly.

Here, the start count indicates the total number of times that the player identified by the player identifier started the online competitive game. The end count indicates the total number of times that the player identified by the player identifier terminated the online competitive game properly.

The host stores the start count and the end count for each player identifier. Therefore, the game machine can calculate the abnormal count by acquiring the start count and the end count corresponding to the accepted player identifier and computing the difference therebetween.

According to a sixth aspect of the present invention, the unauthorized conduct prevention method according to the fifth aspect further comprises the steps of:
requesting the host to increment the start count corresponding to the player identifier upon starting an execution of the online competitive game, and
requesting the host to increment the end count corresponding to the player identifier after the online competitive game is terminated properly.

When the game is terminated properly, the start count and the end count stored in the host are the same. However, when the game is not terminated properly, the start count will be greater than the end count. This is because the end count is not incremented. Therefore, the difference between the start count and the end count indicates the number of times that the game is terminated abnormally.

According to a seventh aspect of the present invention, in the unauthorized conduct prevention method according to the sixth aspect, the generation step transmits a reset request to the host to reset the start count and the end count after the error signal is generated.

There may be a case where the error processes such as outputting the error display and forbidding the game execution are performed based on the generation of the error signal. In this case, by resetting the start count and the end count after the error signal is generated, the error process can be executed, for example, every three times the abnormal termination occurs. The reset request may be transmitted after a predetermined time period has passed since the error signal was generated. If any penalty based on the error signal is given, the predetermined time period can be used as a penalty period for the unauthorized conduct.

According to an eighth aspect of the present invention, in the unauthorized conduct prevention method according to any of the first aspect to the fourth aspect, the game machine is connected to the network via a host, and the detection step has the step of acquiring from the host the abnormal count corresponding to the player identifier accepted in the identification step.

The number of times that each player terminated the game abnormally is stored in the host and the error signal is generated based thereon. The host correlates each player's ID and the abnormal count and stores them. The abnormal count is incremented by the host in response to a request from the game machine. Because the host manages the abnormal count, the abnormal count can be counted even if the player changes a game machine every time the game is executed.

According to a ninth aspect of the present invention, the unauthorized conduct prevention method according to the eighth aspect further comprises the steps of:
detecting a player identifier of a player who did not terminate an online competitive game properly in a previous operation of a game machine, and
an abnormal count updating step of requesting the host to update the abnormal count corresponding to the detected player identifier.

When the game machine is started, the abnormal count of the player who terminated the game abnormally during the previous operation of the game machine is counted up.

For example, a CPU of the game machine writes an abnormal termination flag and a player ID into a hard disk of the game machine when the online competitive game is terminated abnormally. Thereafter, the game machine finishes its operation and the CPU of the game machine refers to the hard disk, for example, when the game device is started again. If the abnormal termination flag is "ON" for any given player ID as a result of referring, the game machine specifies that player ID and requests the host to increment the abnormal count. In this way, the abnormal count of the player who terminated the online competitive game abnormally can be updated when the game machine is started.

According to a tenth aspect of the present invention, in the unauthorized conduct prevention method according to the ninth aspect, the detection step has the steps of:
writing game information regarding the online competitive game and the player identifier into a nonvolatile memory area of the game machine,
deleting the game information and the player identifier that are written in the nonvolatile memory area when the online competitive game is terminated properly, and
searching the player identifier corresponding to the game information in the nonvolatile memory area when the game machine is started.

During the execution of the game, the hard disk and the like of the game machine always have the game information together with the player ID written therein. When the game is terminated properly, the game information is deleted. Conversely, when the game is terminated abnormally, the game information and the player ID remain in the hard disk. Thus, by searching the hard disk at a predetermined timing, for example, at the start-up of the game machine, the player ID of the player who terminated the game abnormally can be transmitted from the game machine to the host and the increment of the abnormal count of that player can be requested. In other words, the abnormal count of the player who terminated the game abnormally during the previous operation of the game machine can be incremented prior to starting the next game.

Note that a timing to search the game information and the player ID in the hard disk of the game machine may be any time while the game machine is in operation. By searching when the game machine is started, however, an ID of the player who terminated the game abnormally by switching off the game machine can be detected and the abnormal count of that player can be incremented instantaneously.

If the game information is transmitted to the host in addition to a player ID, the game information can be reflected in the computation of a ranking of the player concerned.

Here, in a case of a mah-jongg game, a value that a counter indicates and the number of games of the player and the opponent player may be used as the game information. For a soccer game, a score of the player and the opponent player and phases of the game such as the first-half, the second-half and extra game may be examples of the game information.

Note that the abnormal termination flag may be used as the game information if only whether or not the game is terminated abnormally is to be determined. For example, the abnormal termination flag "ON" and the player ID are written into the hard disk upon the start of the game. If the abnormal termination flag and the player ID are made to be deleted when the game is terminated properly, whether or not the game is terminated abnormally can be determined based on whether or not the abnormal termination flag "ON" and the player ID still remain.

According to an eleventh aspect of the present invention, in the unauthorized conduct prevention method according to the tenth aspect, the abnormal count updating step determines whether or not to request the host to update the abnormal count corresponding to the player identifier based on the game information searched in the searching step.

If the game information is written into the hard disk, whether or not the game is intentionally terminated abnormally by the player or is accidentally terminated can be determined. In other words, if the game performance included in the game information is unfavorable to the player, it can be determined that the abnormal termination is intentional. Conversely, if the game performance is favorable to the player, it can be determined that the abnormal termination is accidental. The intentional abnormal termination can be counted more accurately by updating the abnormal count of the player based on this determination.

According to a twelfth aspect of the present invention, in the unauthorized conduct prevention method according to the ninth aspect, the generation step requests the host to reset the abnormal count corresponding to the player identifier accepted in the identification step after the error signal is generated.

There may be a case where the error processes such as outputting the error display and discontinuing the game execution are performed based on the generation of the error signal. In such a case, by resetting the abnormal count after the error signal is generated, the error process can be executed, for example, every three times the abnormal termination occurs. Some kind of penalty based on the error signal may be given. The reset request may be transmitted after a predetermined time period has passed since the error signal was generated. Combined with the penalty, the predetermined time period can be used as a penalty period for the unauthorized conduct.

According to a thirteenth aspect of the present invention, a game machine with an unauthorized conduct prevention function that is connected to another game machine via a network and executes an online competitive game is provided. The game machine comprises:
an identification means for accepting an input of a player identifier that identifies a player who operates the game machine;
an abnormal count detection means for detecting, for each player identifier, an abnormal count that indicates the total number of times that the online competitive game was not terminated properly at the game machine; and
an error signal generation means for generating an error signal based on the abnormal count.

This game machine executes the method of Invention 1, and demonstrates effects identical to those of Invention 1.

According to a fourteenth aspect of the present invention, an unauthorized conduct prevention program executed by a game machine that is connected to another game machine via a network and executes an online competitive game is provided. The program causes the game machine to function as:
an identification means for accepting an input of a player identifier that identifies a player who operates the game machine;
an abnormal count detection means for detecting, for each player identifier, an abnormal count that indicates the total number of times that the online competitive game was not terminated properly at the game machine; and
an error signal generation means for generating an error signal based on the abnormal count.

This program causes the game machine to execute the steps of Invention 1 and demonstrates effects identical to those of Invention 1.

With the present invention, unauthorized conduct can be prevented by counting the number of times that the game was not terminated properly for each player and implementing countermeasures based on the abnormal count.

### BRIEF DESCRIPTION OF THE DRAWINGS

Figure 1 is an explanatory diagram of a configuration of a game system that includes a game machine according to a first embodiment of the present invention.
Figure 2 is a block diagram of hardware of the game machine of Fig. 1.
Figure 3A is an explanatory diagram showing an example of input data.
Figure 3B is an explanatory diagram showing an example of output data.
Figure 4 is a block diagram of a configuration of the game machine in accordance with the first embodiment of the present invention.
Figure 5 is a flow chart showing an example of a main routine carried out by the game machine in accordance with the first embodiment of the present invention.
Figure 6 is a flow chart showing an example of a flow of an opponent player deciding process.
Figure 7 is a flow chart showing an example of a flow of processes carried out by a center server.
Figure 8 is a block diagram of a configuration of a game machine according to a second embodiment of the present invention.
Figure 9 is a flow chart showing an example of a main routine carried out by the game machine in accordance with the second embodiment of the present invention.

### DETAILED DESCRIPTION OF THE PREFERRED EMBODIMENTS

### <First Embodiment>

### [Outline]

A game machine according to a first embodiment compares the number of times that a game is started (hereinafter referred to as "start count") Ns and the number of times that the game is properly terminated (hereinafter referred to as "end count") Ne. If they do not match as a result of the comparison, the game machine generates an error signal. In the present embodiment, when the difference between them exceeds "3", the error signal is generated. Based on this error signal, the game machine outputs an error display and an alarm sound that an unauthorized conduct has been committed. Because the error notification will likely embarrass a player, it is expected that it will lead to the prevention of further unauthorized conduct. It is also possible to give a penalty on a future game performance based on the generated error signal.

### [Configuration]

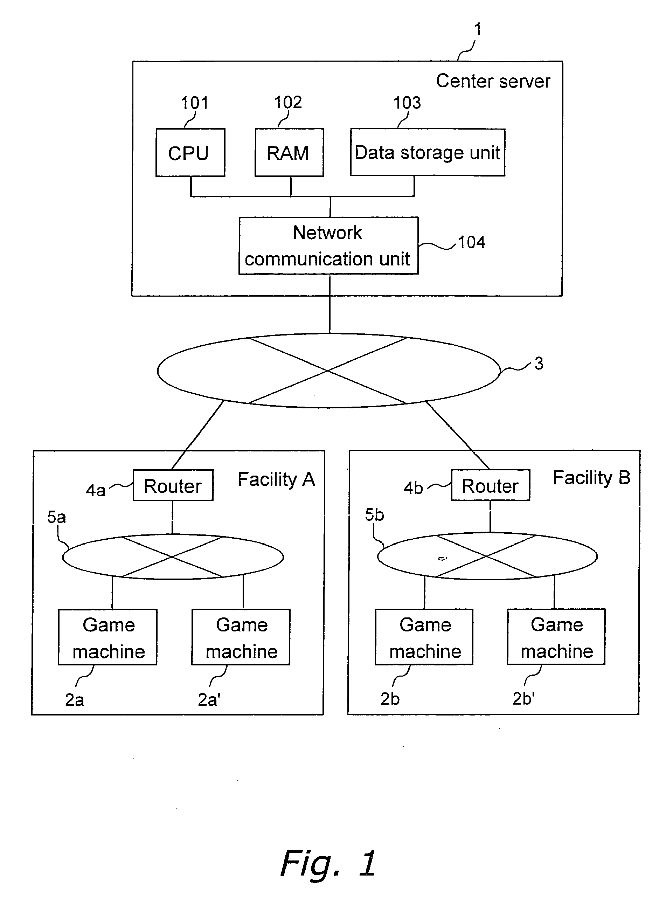

Fig. 1 is an explanatory diagram showing a configuration of a game system that includes a game machine according to the first embodiment of the present invention. This game system includes a center server 1 and a plurality of game machines 2 etc. Each game machine 2 is installed, for example, at facilities A, B, etc. The game machines 2a and 2a' in the facility A are connected to each other by an internal network 5a, for example, a LAN (Local Area Network). Similarly, the game machines 2b and 2b' in the facility B are connected to each other by an internal network 5b. Further, the LAN 5a in the facility A and LAN 5b in the facility B are connected to an external network 3 such as the Internet via a router 4a and a router 4b that are installed at the respective facilities. The center server 1 is connected to the external network 3.

### (1) Center server

The center server 1 stores personal data for each player and, in response to a request from the game machine 2, transmits the personal data to the game machine that requested the personal data. As shown in Fig. 1, the center server 1 includes the following elements (a) to (e).
(a) CPU 101: A CPU 101 reads out a control program and executes it.
(b) RAM 102: A RAM 102 temporarily stores personal data, which differs from game to game, such as data that a player him/herself sets upon playing a game and data based on the past game records.
(c) Data storage unit 103: A data storage unit 103 may be implemented by using a hard disk. The data storage unit 103 stores the control program. The data storage unit 103 stores the personal data transmitted from the control program and the game machine 2. Included in the personal data are a password used for authenticating a player, start count Ns and end count Ne of a game for each player.
(d) Network communication unit 104: A network communication unit 104 exchanges data with the game machine 2 via the external network 3.

The center server 1 having the above-mentioned configuration receives and accumulates a game performance from each game machine 2, and computes a ranking of the players. In response to a request from the game machine 2, the computed result is transmitted to the game machine 2 from the center server 1. A player operating each game machine 2 can check his/her current ranking on a monitor, for example, every time a game is finished.

### (2) Game machine

### (2-1) Hardware configuration

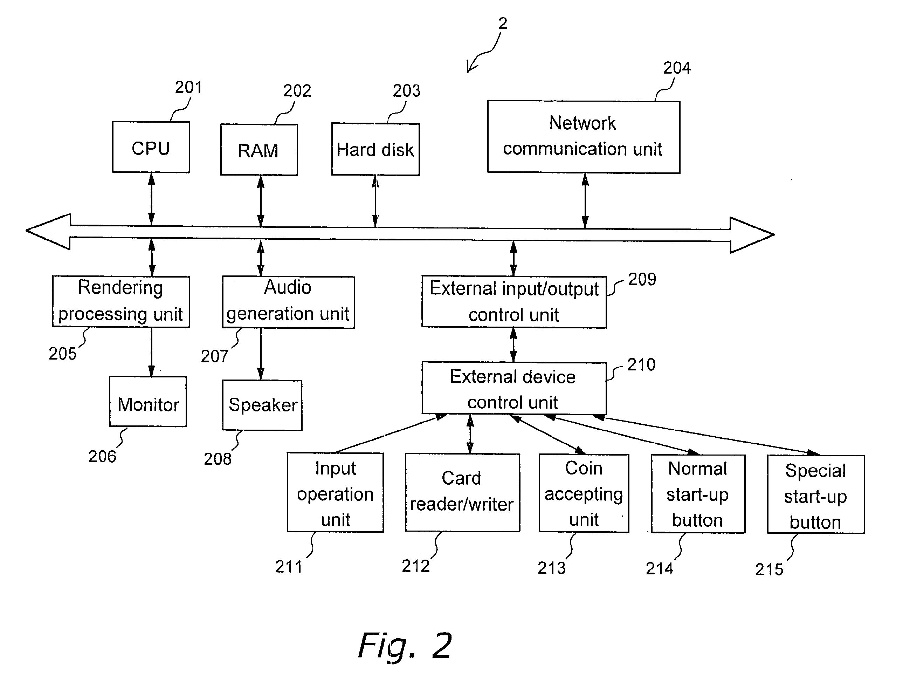

Fig. 2 shows a hardware configuration of the game machine 2. The game machine 2 plays a game with another game machine 2 via the external network 3 and/or the internal network 5 based on the personal data acquired from the center server 1. The game machine 2 includes the following elements (a) to (o).
(a) CPU 201: A CPU 201 executes a control program.
(b) RAM 202: A RAM 202 temporarily stores various variables and parameters.
(c) Hard disk 203: A hard disk 203 stores the control program and various parameters.
(d) Network communication unit 204: A network communication unit 204 exchanges data with the center server 1 and another game machine 2 via the external network 3 and the internal network 5.
(e) Monitor 206: A monitor 206 displays a game image.
(f) Rendering processing unit 205: A rendering processing unit 205 generates image data displayed on the monitor 206.
(g) Speaker 208: A speaker 208 outputs sounds during the execution of a game and display of a demonstration display.
(h) Audio generation unit 207: An audio generation unit 207 generates sound data to be outputted by the speaker 208.
(i) Input operation unit 211: An input operation unit 211 includes a joystick, an operation button and the like and accepts an instruction input by the player.
(j) Card reader/writer 212: A card reader/writer 212 executes a read-out/write-in process to an inserted magnetic card.
(k) Coin accepting unit 213: A coin accepting unit 213 accepts a credit by an inserted coin.
(l) Normal start-up button 214: A normal start-up button 214 is a button in order to start the game machine 2 after a game is finished properly. This button is exposed externally at a body of the game machine 2. By pressing the button, the game machine is started and enters a standby mode to wait for the magnetic card to be inserted while displaying the demonstration display.
(m) Special start-up button 215: A special start-up button 215 is a button for cancelling an output of error notification that is outputted to a player who frequently terminates a game abnormally. This button 215 is in a locked box which can be opened and closed and which is externally attached to or incorporated in the game machine body. By pressing this button, the output of error notification is canceled.
(n) External device control unit 210: An external device control unit 210 controls the external devices such as the card reader/writer 212, coin accepting unit 213, normal start-up button 214, and special start-up button 215.
(o) External input/output control unit 209: An external input/output control unit 209 generates a control signal to the external devices such as the card reader/writer 212 and coin accepting unit 213. It also receives a detected signal from the external devices such as the card reader/writer 212, coin accepting unit 213, normal start-up button 214 and special start-up button 215, and sends out the same to the CPU 201.

The game machine 2 thus configured executes a game as follows in accordance with the control program stored in the hard disk 203. A player inserts his/her magnetic card into the card reader/writer 212 on the game machine 2 and inputs a coin into the coin accepting unit 213. The game machine 2 then reads out a player ID that identifies the player from the magnetic card inserted into the card reader/writer 212 and downloads the personal data stored in the data storage unit 105 of the center server 1.

The game machine 2 performs a process for authenticating the player based on a password included in the personal data. When the player is authenticated, the game machine 2 compares the start count Ns and the end count Ne included in the personal data. When the difference between the two is within a predetermined range, the game machine 2 acquires a network address of an opponent player. In other words, when the authenticated player wishes to play an online competitive game, the game machine 2 transmits its network address to the center server 1 and acquires the network address of the opponent player. Thereafter, the game machine 2 initiates the execution of the online competitive game based on the acquired network address of the opponent player.

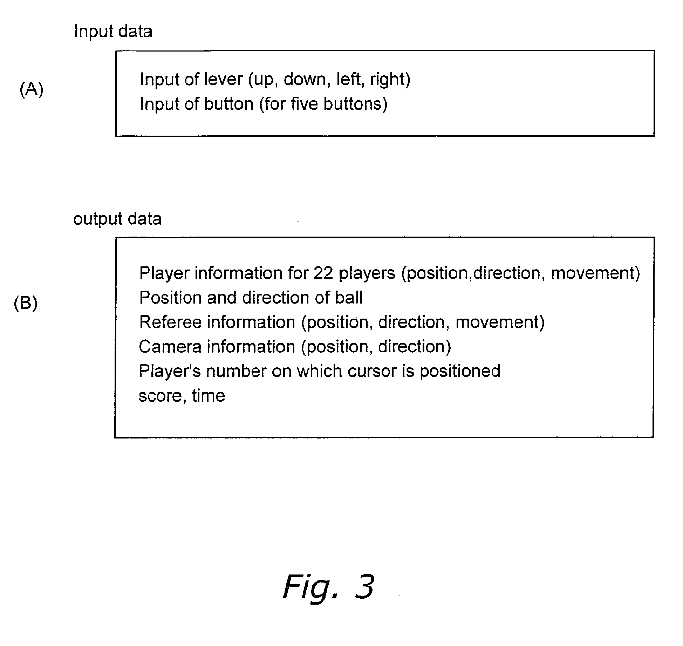

During the execution of the online competitive game, data is exchanged between the game machines. The data to be exchanged may be, for example, the personal data downloaded from the center server 1, input data indicating an operation instruction input of the player and output data for outputting an image and audio. Fig. 3A shows an example of the input data. In this example, input data for a soccer game is shown. This input data indicates "which one of the levers, namely, up, down, left and right was inputted" and "which one of the five buttons was inputted". Fig. 3B shows an example of the output data. The output data is frame data for displaying a game display and audio data for outputting sounds. In this example, output data for a soccer game is shown. The output data is transmitted at given time intervals according to the kind of data. For example, the frame data is transmitted at every 1/30 sec.

### (2-2) Functional configuration

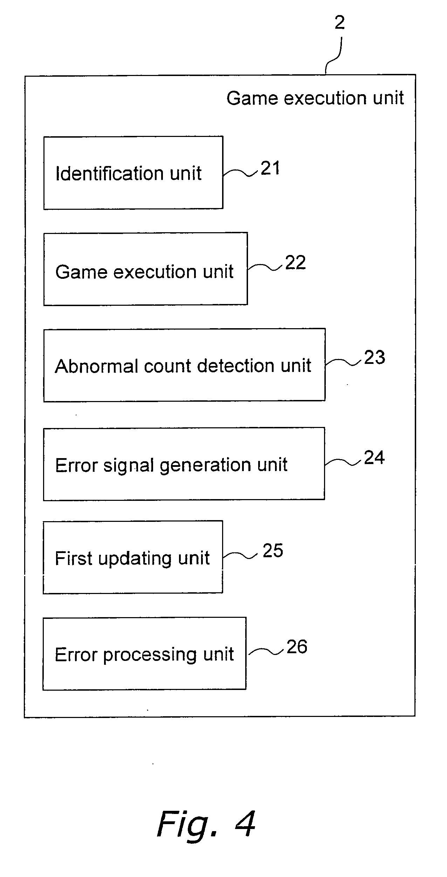

Fig. 4 is a block diagram showing a functional configuration of the game machine 2. The game machine 2 includes an identification unit 21, a game execution unit 22, an abnormal count detection unit 23, an error signal generation unit 24, a first updating unit 25 and an error processing unit 26. These units are implemented by a program executed by the CPU 201. Functions of the game machine 2 will be explained more in detail below. In order to facilitate the explanation, the functions of the game machine 2 in facility A (game machine 2a) when it is playing a game with the game machine 2 in facility B (game machine 2b) will be explained, but each game machine 2 has the same functions.

### (2-2-1) Identification of player

The identification unit 21 accepts a player ID that identifies a player who is operating the game machine 2a. For example, the identification unit 21 reads out the player ID from a magnetic card inserted into the game machine 2a. The identification unit 21 further downloads, from the center server 1, personal data corresponding to the player ID that has been read out, and authenticates the player.

### (2-2-2) Execution of game

The game execution unit 22 executes an online competitive game, for example, a soccer game and mah-jongg game. The game execution unit 22 may also execute a game against the CPU or a game without an opponent player. A music game in which a player makes inputs using an instrument or sings a song along a specified music tune may be an example of the game without an opponent player.

### (2-2-3) Detection of abnormal count

The abnormal count detection unit 23 computes an abnormal count Nw corresponding to the player ID of the authenticated player from the downloaded personal data. The abnormal count Nw indicates the total number of times that the authenticated player did not finish the online competitive game properly.

In the present embodiment, the abnormal count detection unit 23 extracts the start count Ns and end count Ne corresponding to the authenticated player ID from the personal data. Further, the abnormal count detection unit 23 calculates the abnormal count Nw by computing the difference between the start count Ns and the end count Ne (Ns - Ne = Nw). Here, the start count Ns indicates the total number of times that the player identified by the player ID started the online competitive game. The end count Ne indicates the total number of times that the player identified by the player ID finished the online competitive game properly.

Here, a case where the online competitive game is not terminated properly, namely, the abnormal termination, includes the one that is committed intentionally and the one that happens accidentally. For example, it is conceivable that the intentional abnormal termination is caused by the player pulling a LAN cable from the game machine 2 and the player switching the game machine 2 off. A case where the communication between the game machine 2 and the center server 1 is interrupted because the Internet is busy may be an example of the cause of the accidental abnormal termination.

### (2-2-4) Generation of error signal

The error signal generation unit 24 generates an error signal based on the abnormal count Nw that the abnormal count detection unit 23 has computed. In the present embodiment, when the abnormal count Nw exceeds a predetermined range, the error signal is generated assuming that the player has committed an unauthorized conduct several times whereby the intentional abnormal termination has occurred. More specifically, the error signal generation unit 24 determines whether or not the abnormal count Nw exceeds a predetermined maximum value Max and, if it does, generates the error signal. Because the accidental abnormal termination does not occur so frequently, it can be assumed that it is highly probable that the abnormal termination has been committed intentionally when the abnormal count is overly high. Future unauthorized conduct will be deterred by executing a predetermined error process after the error signal is generated. Outputting an error notification and forbidding the start of a game may be examples of the error process.

### (2-2-5) Increment of start count and end count

The first updating unit 25 requests the center server 1 to increment the start count Ns corresponding to the player ID upon the start of the execution of the online competitive game. The timing to request is preferably right after the game is started. Also, the first updating unit 25 requests the center server 1 to increment the end count Ne corresponding to the player ID after the online competitive game is properly terminated.

When the game is terminated properly, the start count Ns and the end count Ne stored in the center server 1 are the same. When the game does not finish properly, however, the start count Ns is greater than the end count Ne because the end count Ne has not been incremented. Therefore, by updating the start count Ns and the end count Ne independently at different times, the difference between the two will indicate the number of times that the game is terminated abnormally.

Note that the first updating unit 25 may transmit a facility ID that identifies a facility in which the game machine 2a is installed to the center server 1 as well as the start count Ns and the end count Ne. In this way, the center server 1 can know at which facility an unauthorized conduct is committed. The first updating unit 25 may also transmit time information to the center server 1 as well as the start count Ns and the end count Ne. This allows the center server 1 to know the date and time of an unauthorized conduct. In addition, it becomes possible that the center server 1 gives the player a penalty such as prohibiting use of the magnetic card for a certain period of time from the date that an unauthorized conduct is committed.

### (2-2-6) Error occurrence notification

The error processing unit 26 outputs an error notification based on the error signal generated by the error signal generation unit 24. Outputting an error display and an alarm sound may be examples of how the error notification is outputted. When the abnormal count exceeds the maximum value Max, namely, when it is determined that the intentional abnormal termination is committed frequently, the error notification is outputted. This embarrasses the player and further unauthorized conduct can be prevented.

The error processing unit 26 may also forbid the execution of the online competitive game based on the error signal. Unauthorized conduct can possibly be deterred by giving a penalty in which a game cannot be continued when it is determined that an unauthorized conduct has been committed. The execution of the online competitive game may be forbidden for a predetermined period of time after the error signal is generated.

For example, after the error notification is outputted, the error processing unit 26 may forbid the start of the game until the special start-up button 215 is pressed. The special start-up button 215, for example, is in a locked box. Only the staff at a game center keep the key for the locked box. The special start-up button 215 cannot be pressed unless the staff unlocks the box. In order to cancel the error notification output status, it is necessary to press the special start-up button 215. Therefore, if the player, who intentionally terminated the game abnormally, wants to play the game again, he/she needs to ask the staff to open the locked box and to press the special start-up button 215. This means that the unauthorized conduct that he/she has committed is revealed to the staff, which embarrasses the player, thereby deterring further unauthorized conduct.

Note that the normal start-up button 214 is attached to the body of the game machine 2a externally so that anyone can press it. When the game center opens, the game machine 2a is started by pressing the normal start-up button 214. Here, "start-up of the game machine 2a" does not mean the execution of an actual game. It means, for example, that a program for executing a demonstration of a game is started and the game machine 2a is put into a state in which it is ready to accept the insertion of a card and the input of a coin.

Note that the error processing unit 26 may give some kind of penalty to the player who committed an unauthorized conduct. Giving the penalty will likely further deter unauthorized conduct. For example, the error processing unit 26 may request the center server 1 to deduct a point from accumulated acquired points that indicate the game performance, and to lower the ranking.

### (2-2-7) Reset of start count and end count

The error signal generation unit 24 transmits to the center server 1 a reset request to reset the start count Ns and the end count Ne after the error signal is generated. This allows the error signal generation unit 24 to execute the error process every time the abnormal termination occurs Max times. It is because the start count Ns and the end count Ne are reset every time the abnormal count Nw exceeds the maximum value Max. The error signal generation unit 24 may transmit the reset request after a predetermined time period has passed since the error signal was generated. It is because the predetermined time period can be used as a penalty period for the unauthorized conduct if any penalty is to be given based on the error signal.

Further, the error signal generation unit 24 preferably transmits the reset request to reset the start count Ns and the end count Ne after the error notification is outputted and the special start-up button 215 is pressed. It is because the player will be left in a position where the game cannot be played unless the error notification is properly canceled by the special start-up button 215. For example, it is conceivable that the player attempts to cancel the output of the error notification by switching off the game machine 2a after the error notification is outputted. In that case, however, the error notification will be outputted again because the start count Ns and the end count Ne have not been reset. In other words, the special start-up button 215 becomes effective by transmitting the reset request to reset the start count Ns and the end count Ne only when the error notification is properly canceled.

### [Processing flow]

Next, processes that the game machine 2 and the center server 1 perform are explained more in detail. In order to facilitate the explanation, the processes of the game machine 2 in facility A (game machine 2a) when it is playing a game with the game machine 2 in facility B (game machine 2b) will be explained, but the processes by the game machine 2b is the same.

### (1) Main routine of game machine

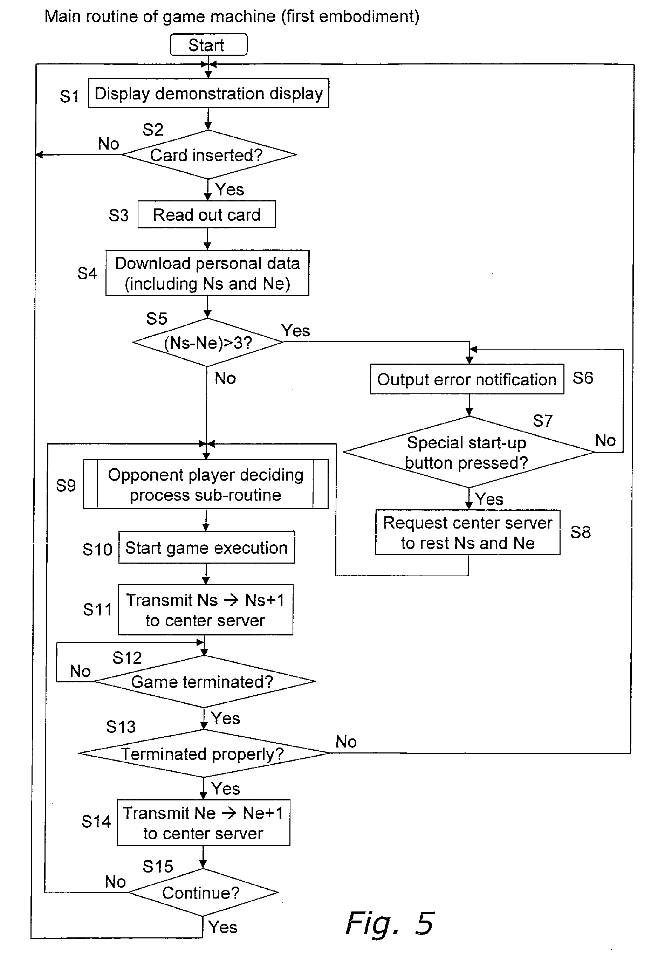

Fig. 5 is a flow chart showing an example of a main routine carried out by the game machine 2. When the game machine 2a is switched on, the following processes start.

Step S1-S2: The CPU 201 waits for an instruction to execute a game while displaying a demonstration display (S1). For example, when a coin is inputted and a magnetic card is inserted into the card reader/writer 212 (S2), a process proceeds to step S3.

Step S3: The CPU 201 acquires a player ID read out by the card reader/writer 212.

Step S4: The CPU 201 transmits the read out player ID to the center server 1 and downloads personal data corresponding to the player ID. Subsequently, the CPU 201 preferably requests the player to input his/her password and authenticates the player by comparing it with a password included in the personal data.

Step S5: The CPU 201 determines whether or not the difference between a start count Ns and an end count Ne included in the personal data exceeds a predetermined maximum value Max ((Ns-Ne) > Max). In other words, the CPU 201 determines whether or not an abnormal count Nw exceeds the maximum value Max. Here, in order to facilitate the explanation, Max is 3. Where (Ns-Ne) > 3, a process proceeds to step S6, otherwise, a process proceeds to step S9 which will be discussed later.

Step S6: The CPU 201 outputs an error notification. For example, an error message such as "The game cannot be started." is displayed or outputted from a speaker.

Step S7-S8: The CPU 201 waits for the special start-up button 215 to be pressed (S7). The CPU 201 transmits a reset request to reset the start count Ns and the end count Ne to the center server 1 (S8) when the special start-up button 215 is pressed. In other words, the start count Ns and the end count Ne are reset only when the error notification output is canceled by the special start-up button 215. Even when the player switches the game machine 2a off without having the special start-up button 215 pressed, the values of the start count Ns and the end count Ne remain the same. Therefore, when the player starts the game machine 2a again, only the error notification is outputted again and the player cannot start the game.

Step S9: When the error notification is canceled properly (S8), or when the abnormal count Nw has not exceeded 3 (S5), the CPU 201 executes an opponent player deciding process (S9). In this process, the CPU 201 acquires an IP address of the game machine 2b of the opponent player.

Step S10: The CPU 201 executes the game based on the acquired IP address. The execution of the game is performed independently of the main routine. In the present example, there are cases where the game is terminated properly and where the game is terminated abnormally. A communication failure of the external network 3, a communication failure of the internal network 5 and turning off the power of the game machine 2a may be causes of the abnormal termination. Pulling a LAN cable from the game machine 2a can be a cause of the communication failure of the internal network 5.

Step S11: The CPU 201 increments the start count Ns included in the personal data and transmits the new start count Ns and the player ID to the center server 1 (Ns → Ns+1). With this, the start count Ns of the corresponding player stored in the center server 1 is updated.

Step S12-S14: The CPU 201 waits for the termination of the game (S 12). When the game is terminated, the CPU 201 determines whether or not the game has been terminated properly (S 13). When the game has been terminated properly, the CPU 201 increments the end count Ne and transmits the new end count Ne and the player ID to the center server 1 (S 14). With this, the end count Ne of the corresponding player stored in the center server 1 is updated. When the game has not been terminated properly, a process returns to Step S1 and the aforementioned processes are repeated. Namely, the game machine 2 waits for the magnetic card to be inserted while displaying the demonstration display again.

Step S 15: The CPU 201 determines whether or not to continue the game, and if it determines to continue, a process returns to Step S9 and acquires a communication address of a new opponent player from the center server 1. If it determines not to continue the game, a process returns to Step S1 and waits for the card to be inserted while displaying the demonstration display.

Note that the CPU 201 may transmit the facility ID that identifies a facility in which the game machine 2a is installed to the center server 1 as well as the start count Ns and the end count Ne. This allows the center server 1 to know at which facility an unauthorized conduct is committed. The CPU 201 may also transmit time information to the center server 1 as well as the start count Ns and the end count Ne. Otherwise, the center server 1 itself may store the time information when the data is received. This allows the center server 1 to know the date and time when an unauthorized conduct is committed. Further, it becomes possible that the center server 1 gives the player a penalty such as forbidding use of the magnetic card for a certain period of time from the date that an unauthorized conduct is committed.

In the aforementioned processing, the error notification is made to the player who terminated the game abnormally and the embarrassment felt by the player will serve as a deterrent to an unauthorized conduct. Also, the special start-up button 215 becomes effective by resetting the abnormal count only when the error notification output is canceled properly after the error notification is made. In the present processing, because the start count Ns and the end count Ne are updated at different times, there is a match between the two only when the game is terminated properly and thus, the abnormal count can be accurately counted.

### (2) Opponent player deciding process by game machine

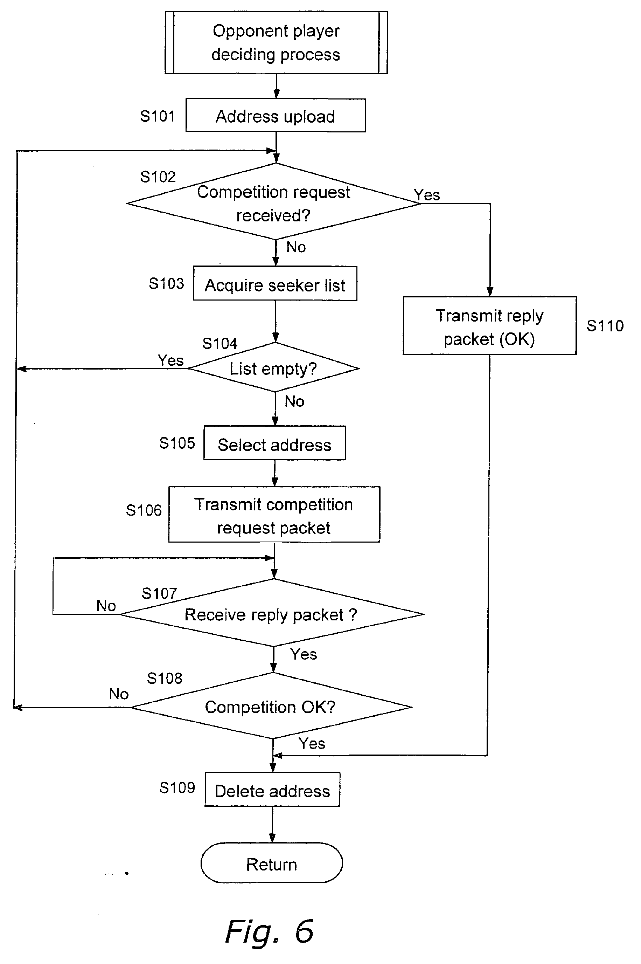

Fig. 6 is a flow chart showing an example of a flow of an opponent player deciding process executed in Step S9 of the aforementioned main routine. In this process, the CPU 201 acquires the IP address of the game machine of the opponent player from the center server 1.

Step S101: The CPU 201 transmits its own IP address to the center server 1 and requests that the IP address be registered in a seeker list stored in a RAM 102 of the center server 1. An IP address of the game machine 2 that is looking for an opponent player is written into the seeker list.

Step S102-S103: The CPU 201 determines whether or not a competition request is received from the other game machine 2b (S102), and if it has not been received, acquires the seeker list from the center server 1 (S103).

Step S104-S105: The CPU 201 determines whether or not one or more IP addresses other than that of its own is registered (S104), and if it is determined to be "Yes", selects any given IP address (S105).

Step S106: The CPU 201 transmits a competition request packet in which a competition request command is described to the selected IP address.

Step S107-S109: The CPU 201 waits for a reply packet to the transmitted competition request packet (S107), and if the reply "competition OK" is received (S108), requests the center server 1 to delete the IP address of its own from the seeker list (S109). If the competition is rejected (S108), a process returns to Step S102 and the aforementioned processes are repeated.

Step S110: If a competition request is received at step S102 after registering the IP address in the seeker list (S102), the CPU 201 transmits a reply packet of "competition OK" to the requestor (S 110), and has the IP address of its own deleted from the seeker list (S109).

With the above processes, the game machine 2a can acquire the IP address of the opponent player with whom the online competitive game is played. Note that the number of opponent players depends on a game to be played. For example, the soccer game requires one opponent player while the mah-jongg game requires three.

### (3) Processing of center server

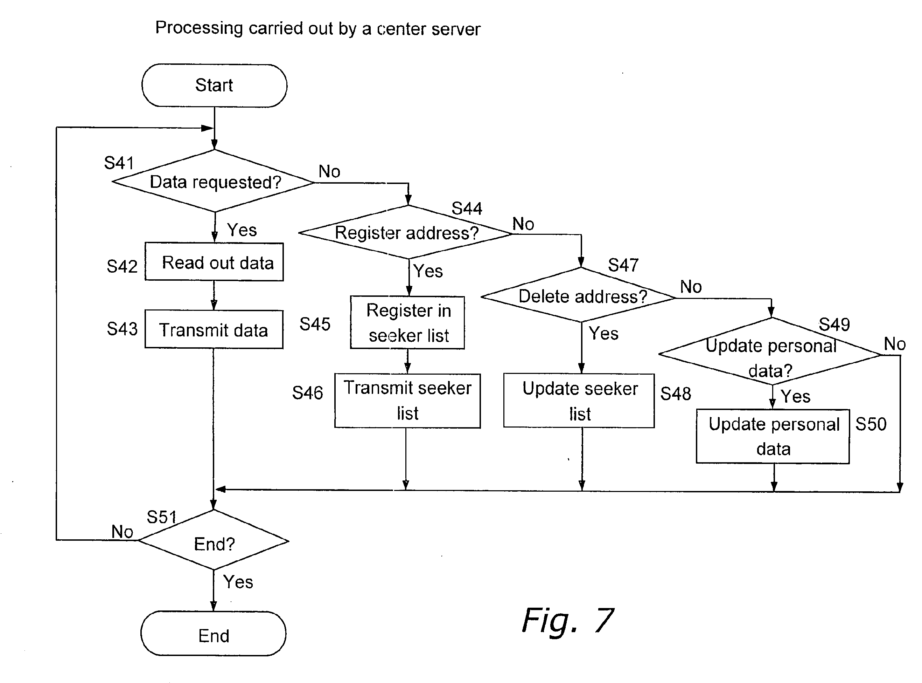

Fig. 7 is a flow chart showing an example of a flow of a processes carried out by the center server 1. The processes are is initiated upon the start-up of the center server 1. The CPU 101 of the center server 1 performs a process for transmitting personal data to the game machine 2 (S41-S43), a process for registering in the seeker list (S44-S46), a process for deleting from the seeker list (S47-S48) and a process for receiving the personal data from the game machine 2 (S49-S50).

Step S41-S43: When the CPU 101 receives a request for personal data from any of the game machines 2 (S41), the CPU 101 reads out the requested personal data from the data storage unit 103 (S42) and transmits it to the requestor. Personal data is correlated with a player ID and stored in the data storage unit 103. Personal data includes a password used for authenticating a player, the start count Ns and the end count Ne.

Step S44-S46: When the CPU 101 receives a registration request to register an IP address in the seeker list from any game machine 2 (S44), the CPU 101 registers the IP address of that game machine 2 in the seeker list (S45) and transmits the seeker list to the requestor (S46).

Step S47-S48: When the CPU 101 receives a deletion request to delete an IP address from the seeker list from any game machine 2 (S47), that IP address is deleted from the seeker list (S48). Because only an IP address of a game machine 2 whose opponent player has not been decided is listed in the seeker list, an IP address of a game machine 2 whose opponent player has been decided is deleted from the seeker list.

Step S49-S50: When the CPU 101 receives a player ID and personal data from any of the game machines 2 (S49), the CPU 101 updates the personal data corresponding to that player ID. The start count Ns, the end count Ne and the game performance may be examples of the personal data to be received.

Step S51: The CPU 101 repeats the aforementioned processes until, for example, the power of the center server 1 is turned off.

With the aforementioned processes, the center server 1 transmits personal data and an IP address of an opponent player to the game machine 2. Also, when receiving a part of personal data from the game device 2, the center server 1 correlates it with a player ID and stores the same. A game performance among the stored personal data is used for computing a ranking of the player.

As mentioned above, the center server 1 may additionally write the time when the start count Ns or the end count Ne is received into the personal data. This makes it possible to know the date and time when an unauthorized conduct was committed and to set a predetermined time period after an unauthorized conduct was committed as a penalty period. Further, the center server 1 may give a penalty to the game performance based on the difference between the start count Ns and the end count Ne.

### [Effect]

In the present embodiment, the number of times Nw that the game was not terminated properly is counted by updating the start count Ns and the end count Ne independently at different times. Unauthorized conduct will be prevented by outputting the error notification based on the abnormal count. The error notification becomes even more effective by limiting the execution of the game after the error notification. Furthermore, the special start-up button 215 is effectively used to prevent unauthorized conduct by resetting the abnormal count only when the error notification output is properly canceled.

### <Second embodiment>

### [Outline]

A game machine 2 according to a second embodiment acquires the number of times Nw that the game is terminated abnormally from the center server 1. The error signal is generated based on the acquired abnormal count Nw. In the second embodiment, the error signal is generated when the abnormal count Nw exceeds "3". Based on this error signal, the game machine 2 notifies that an unauthorized conduct has been committed by outputting an error display and an alarm sound. Because the error notification embarrasses the player, it can be expected that future unauthorized conduct will be deterred. It is also possible to give a penalty to a future game performance based on the generated error signal.

### [Configuration]

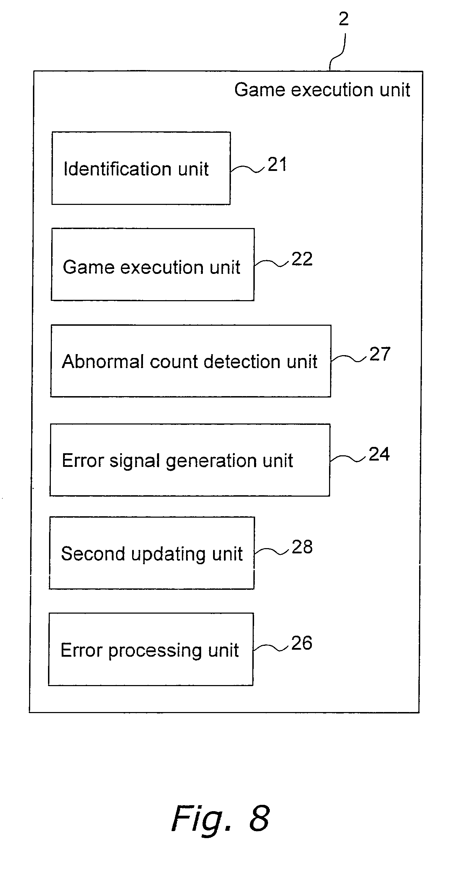

Fig. 8 is a block diagram showing a configuration of a game machine 2 according to the second embodiment. A system configuration and hardware configurations of the center server 1 and the game machine 2 are the same as those of the first embodiment.

The game machine 2 of the second embodiment is the same as the game machine 2 in the first embodiment except that the game machine 2 of the second embodiment includes a second updating unit 28 instead of the first updating unit 25. In the figure, the same reference numerals are assigned to the elements that have the same function described in the first embodiment. These units are implemented by a program executed by the CPU 201. Functions of the game machine 2 of the second embodiment will be explained more in detail below. In order to facilitate the explanation, the functions of the game machine 2 in facility A (game machine 2a) when it is playing a game with the game machine 2 in facility B (game machine 2b) will be explained, but each game machine 2 has the same functions.

### (1) Identification of player

The identification unit 21 accepts an input of a player ID, downloads personal data from the center server 1 and authenticates the player. The function of the identification unit 21 is the same as that of the first embodiment.

### (2) Execution of game

The game execution unit 22 executes the online competitive game. The function of the game execution unit 22 is the same as that of the first embodiment.

### (3) Detection of abnormal count

The abnormal count detection unit 27 computes from the downloaded personal data the abnormal count Nw corresponding to the player ID of the authenticated player. The abnormal count Nw indicates the total number of times that the authenticated player did not finish the online competitive game properly.

In the present embodiment, the abnormal count detection unit 27 extracts the abnormal count Nw corresponding to the authenticated player ID from the personal data downloaded by the identification unit 21. In the second embodiment, the number of times Nw that each player terminated the game abnormally is stored in the center server 1 and the error signal is generated based thereon. Each player ID and his/her abnormal count are correlated by and stored in the center server 1. The abnormal count Nw is updated in response to a request from the game machine 2. Because the center server 1 manages the abnormal count, the abnormal count can be counted even if the player changes a game machine 2 that he/she plays every time the game is executed.

Here, a case where the online competitive game is not terminated properly, namely, the abnormal termination, includes the one that is committed intentionally and the one that happens accidentally, which is the same with the first embodiment.

### (4) Write-in of game information

The abnormal count detection unit 27 writes game information and the player ID into a nonvolatile memory area of the game machine 2, for example, the hard disk 203, during the execution of the online competitive game. The abnormal count detection unit 27 deletes the written game information and player ID from the hard disk 203 when the game is terminated properly. Therefore, the game information and the player ID will remain in the hard disk 203 if the online competitive game is not terminated properly. Thus, by searching the hard disk 203 at a predetermined time, for example, at the start-up of the game machine 2, the player ID of the player who terminated the game abnormally can be transmitted from the game machine 2 to the center server 1 and the increment of the abnormal count Nw of that player can be requested.

The game performance of the opponent player may be an example of the game information. An abnormal termination flag "ON" may also be used as the game information. For a mah-jongg game, for example, "a value that a counter indicates and the number of games of the player and the opponent player" may be used as the game information. For a soccer game, a score of the player and the opponent player and phases of the game such as the first-half, the second-half and extra game may be examples of the game information.

Note that the abnormal termination flag can be used as the game information if only whether or not the game is terminated abnormally is to be determined. For example, the abnormal termination flag "ON" and the player ID are written into the hard disk 203 upon the start of the game. If the abnormal termination flag and the player ID are made to be deleted when the game is terminated properly, whether or not the game is terminated abnormally can be determined based on whether or not the abnormal termination flag "ON" and the player ID still remain.

Meanwhile, if there are competition results, for example, scores of the participants and the like are written into the hard disk 203, whether or not the game is intentionally terminated abnormally by the player or is accidentally terminated can be determined based on the competition results. In other words, if the competition result is unfavorable to the player, it can be determined that the abnormal termination is intentional. Conversely, if the competition result is favorable to the player, it can be determined that the abnormal termination is accidental. This determination is performed by the second updating unit 28.

### (5) Update of abnormal count

The abnormal count detection unit 27 detects, at a predetermined time, a player ID of a player who did not terminate the online competitive game properly during the previous operation of the game machine 2. Specifically, the abnormal count detection unit 27 searches among the game information and player IDs that remain in the hard disk 203, for example, when the game machine 2 is started. The second updating unit 28 requests the center server 1 to update the abnormal count Nw that corresponds to the player ID based on the search result.

By searching and updating the abnormal count Nw when the game machine 2 is started, the abnormal count Nw of the player who terminated the game abnormally during the previous operation of the game machine 2 can be incremented prior to starting the next game. In other words, when the game machine 2 is started, the abnormal count Nw of the player who terminated the game abnormally during the previous operation of the game machine 2 is updated. For example, if the abnormal termination flag is "ON" for any player ID as a result of searching the hard disk 203, the abnormal count detection unit 27 specifies the player ID and requests the center server 1 to increment the abnormal count Nw. In this way, the abnormal count Nw of the player who terminated the online competitive game abnormally can be updated when the game machine 2 is started.

Note that a timing to search the hard disk 203 of the game machine 2 for the game information and player ID may be any time while the game machine 2 is operating. The game information may be searched at every predetermined time period after the game machine 2 is started. In the case where the game is terminated abnormally by switching off the power of the game machine 2, an ID of the player who was playing that game can be detected and the abnormal count Nw of the player can be incremented instantaneously by searching when the game machine 2 is started.

The second updating unit 28 may transmit game information in addition to a player ID to the center server 1. The game information can be reflected in the computation of a ranking of the player concerned.

The second updating unit 28 may also unconditionally request the center server 1 to update the abnormal count Nw corresponding to the player ID based on the searched game information and player ID. In other words, the second updating unit 28 may request the update of the abnormal count Nw of the corresponding player ID when the game information remains in the hard disk 203. For example, this may be done when the abnormal termination flag is used as the game information.

Meanwhile, the second updating unit 28 may determine whether or not to request the update of the abnormal count Nw corresponding to the player ID based on the searched game information. For example, this may be done when the competition result is included in the game information. In this case, if the competition result is unfavorable to the player, it can be determined that the abnormal termination is intentional. Conversely, if the competition result is favorable to the player, it can be determined that the abnormal termination is accidental. Based on this determination, the second updating unit 28 may determine whether or not to transmit the request to update the abnormal count Nw of the player. In this way, the intentional abnormal termination can be counted more accurately.

### (6) Generation of error signal

The error signal generation unit 24 generates the error signal based on the abnormal count Nw computed by the abnormal count detection unit 27. The function of the error signal generation unit 24 is the same as that of the first embodiment. In the second embodiment, when the abnormal count Nw exceeds a predetermined range, for example, the maximum value of Max, the error signal is generated assuming that the player has committed the intentional abnormal termination several times. Similar to the first embodiment, when the abnormal count is overly high it is highly probable that the abnormal termination has been committed intentionally. Future unauthorized conduct will be deterred by executing a predetermined error process after generating the error signal. Outputting an error notification and forbidding starting the game may be examples of the error process.

### (7) Error occurrence notification

The error processing unit 26 outputs an error notification based on the error signal generated by the error signal generation unit 24. Outputting an error display and an alarm sound embarrasses the player and further unauthorized conduct can be prevented. The function of the error processing unit 26 is the same as that of the first embodiment.

The error processing unit 26 may also forbid the execution of the online competitive game based on the error signal. Unauthorized conduct can possibly be deterred by giving a penalty in which a game cannot be continued when it is determined that an unauthorized conduct has been committed. The execution of the online competitive game may be forbidden for a predetermined period of time after the error signal is generated.

For example, after the error notification is outputted, the error processing unit 26 may forbid the start of the game until the special start-up button 215 is pressed. In this way, it is expected that the player will not commit an unauthorized conduct because he/she cannot execute the game unless he/she asks the staff to press the special start-up button 215. Note that the error processing unit 26 may give some kind of penalty such as deducting a point from the game performance and lowering the ranking of the player who committed the unauthorized conduct. Giving the penalty will further deter unauthorized conduct.

### (8) Reset of abnormal count

The error signal generation unit 24 transmits a reset request to reset the abnormal count Nw to the center server 1 after the error signal is generated. In this way, the error signal generation unit 24 executes the error process every time the abnormal termination occurs Max times. The function of the error signal generation unit 24 is the same as that of the first embodiment except that the data to be transmitted is the abnormal count Nw.

The error signal generation unit 24 may transmit the reset request after a predetermined time period has passed since the error signal was generated. If some kind of penalty is to be given based on the error signal the predetermined time period can be used as a penalty period for an unauthorized conduct 1.

Further, the error signal generation unit 24 preferably transmits the reset request to reset the abnormal count Nw after the error notification is outputted and the special start-up button 215 is pressed. Thus, the player will be left in a position where the game cannot be played unless the error notification is properly canceled by the special start-up button 215.

### [Processing flow]

Next, processes that the game machine 2 performs is explained in more detail. In order to facilitate the explanation, the processes of the game machine 2a when it is playing a game with the game machine 2b will be explained, but the processing of the game terminal 2b is the same. Note that the flow of processes by the center server 1 is the same as that of the first embodiment (Fig. 7).

### (1) Main routine of game machine

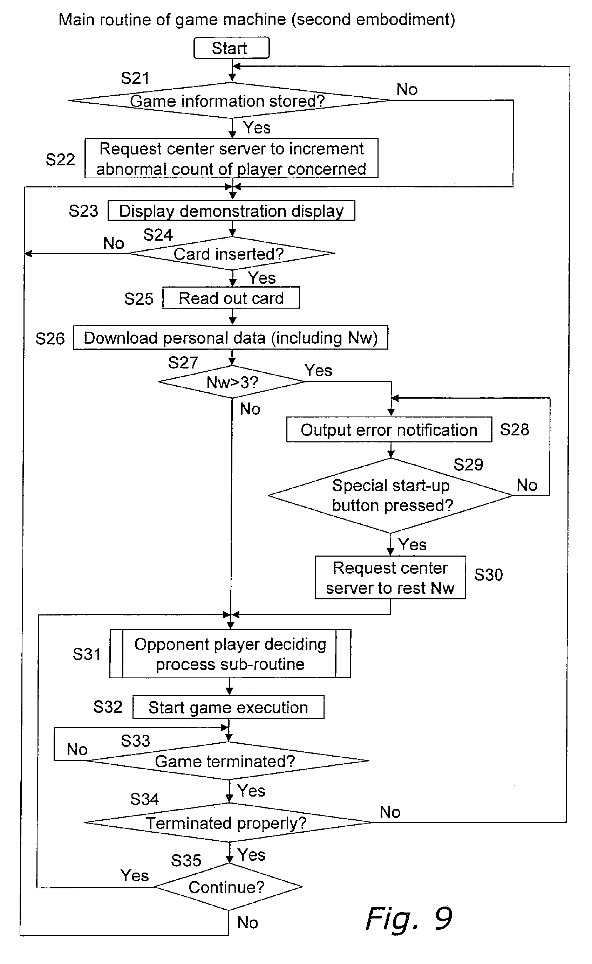

Fig. 9 is a flow chart showing an example of a flow of a main routine carried out by the game machine 2a. When the game machine 2a is switched on, the following processes start.

Step S21-S22: The CPU 201 refers to a predetermined area of the hard disk 203 and determines whether or not a player ID and game information are stored in the hard disk 203 (S21). If the player ID and game information are stored, the CPU 201 transmits the player ID to the center server 1 and requests that the abnormal count Nw that is correlated to the player ID be incremented. In response to this request, the abnormal count Nw is updated (Nw → Nw+1) (S22).

Note that it is possible that the CPU 201 transmits the game information written in the hard disk 203 to the center server 1 together with the player ID. If the game information of the game terminated abnormally is transmitted to the center server 1, the player's intention to prevent the transmission of the game information that is unfavorable to him/her cannot be achieved, thereby possibly deterring unauthorized conduct. Also, unauthorized conduct can be invalidated by reflecting the game information that is unfavorable upon the player in a ranking of the player.

Step S23-S24: The CPU 201 waits for an instruction to execute a game while displaying a demonstration display (S23). For example, when a coin is inputted and a magnetic card is inserted into the card reader/writer 212 (S24), the process proceeds to step S25.

Step S25: The CPU 201 acquires a player ID read out by the card reader/writer 212.

Step S26: The CPU 201 transmits the player ID that is read out to the center server 1 and downloads personal data corresponding to the player ID. Subsequently, the CPU 201 preferably requests the player to input his/her password and authenticates the player by comparing it with a password included in the personal data.

Step S27: The CPU 201 determines whether or not the abnormal count Nw included in the personal data exceeds a predetermined maximum value Max (Nw > Max). Here, in order to facilitate the explanation, Max is 3. Where Nw > 3, a process proceeds to step S28, otherwise, a process proceeds to step S31.

Step S28: The CPU 201 outputs an error notification. For example, an error message such as "The game cannot be started" is displayed or outputted from a speaker.

Step S29-S30: The CPU 201 waits for the special start-up button 215 to be pressed (S29). The CPU 201 transmits a reset request to reset the abnormal count Nw to the center server 1 (S30) when the special start-up button 215 is pressed. In other words, the abnormal count Nw is reset only when the error notification output is canceled by the special start-up button 215. Even when the player switches the game machine 2a off without pressing the special start-up button 215 at this stage, the value of the abnormal count Nw remains the same. Therefore, when the player restarts the game machine 2a, only the error notification is outputted again. Thus, the player cannot start the game.

Step S31: When the error notification is canceled properly (S30) or when the abnormal count Nw has not exceeded 3 (S27), the CPU 201 executes the aforementioned opponent player deciding process (Fig. 6). With this process, the CPU 201 acquires an IP address of the game machine 2b of the opponent player.

Step S32: The CPU 201 executes the game based on the acquired IP address. The execution of the game is performed independently of the main routine. In the present example, there are cases where the game is terminated properly and where the game is terminated abnormally. A communication failure of the external network 3, a communication failure of the internal network 5 and turning off the power of the game machine 2a may be causes of the abnormal termination. Pulling a LAN cable from the game machine 2a can be a cause of the communication failure of the internal network 5. The CPU 201 writes the game information into a predetermined area of the hard disk 203 during the execution of the game. For example, a score of a counter and a phase of the game of the player and the opponent player are written in as the game information for a mah-jongg game.

Step: S33-534: The CPU 201 waits for the termination of the game (S33). When the game is terminated, the CPU 201 determines whether or not the game has been terminated properly (S34). When the game has been terminated properly, the CPU 201 deletes the game information and the player ID written into the hard disk 203. When the game has not been terminated properly, the CPU 201 returns to Step S21 again and repeats the aforementioned processes. Therefore, the abnormal count Nw of the player who terminated the game abnormally is updated in Step S21.

Step S35: When the game has been terminated properly, the CPU 201 deletes the game information written in the predetermined area of the hard disk 203. Thereafter, the CPU 201 determines whether or not to continue the game, and if it determines to continue, a process returns to Step S31 and acquires a communication address of a new opponent player from the center server 1. If it determines not to continue the game, a process returns to Step S23 and waits for the card to be inserted while displaying the demonstration display.

In the aforementioned processes, the error notification is made to the player who terminated the game abnormally and the embarrassment felt by the player will serve as a deterrent to unauthorized conduct. Also, the special start-up button 215 becomes effective by resetting the abnormal count Nw only when the error notification output is canceled properly after the error notification is made. By storing an ID and game information of the player who terminated the game abnormally in the game machine 2, the abnormal count Nw of that player can be updated when the game machine 2 is started.

### [Effect]

In the present embodiment, the number of times that the game was not terminated properly is counted by updating the abnormal count Nw when the game machine 2 is started. Further unauthorized conduct will be prevented by outputting the error notification based on the abnormal count Nw. The error notification becomes even more effective by limiting execution of the game after the error notification via the special start-up button 215. The special start-up button 215 is effectively used to prevent unauthorized conduct by resetting the abnormal count Nw only when the error notification output is properly canceled.

### <Other embodiments>

(A) In the first and second embodiments, the error signal is generated when the abnormal count Nw exceeds a predetermined maximum value which indicates that it is highly probable that the player has intentionally terminated the game abnormally. However, an intentional abnormal termination may be determined when it is detected that the player pulls out a LAN cable or switches off the game machine before transmission of the game performance is completed.
   Detecting international interference with the transmission of the game performance can be detected by transmitting a response request to a router 4a, 4b connected to the LAN 5a, 5b. If there is no response to the request after a predetermined time has passed, it is determined that some kind of communication failure has occurred in the external network 3 or in the internal network 5a, 5b. At this time, if the response request is transmitted to the router 4a, 4b connected between the external network 3 and the internal network 5a, 5b but the transmission does not complete within a predetermined time period, it can be determined that a communication failure in the internal network 5a, 5b has occurred. And it can be assumed that this communication failure in the internal network 5a, 5b is due to the pull-out of the LAN cable. Conversely, because the response does not come back from the router 4a, 4b if a communication failure has occurred in the external network 3, it is possible to distinguish it from the communication failure in the internal network 5a, 5b.
   The pull-out of the LAN cable may also be detected as follows. The CPU 201 monitors whether or not the transmission of the game performance from the game machine 2 to the center server 1 is completed in a predetermined time period after the online competitive game was terminated. If the transmission of the game performance is not completed in the predetermined time period, the CPU 201 determines that the online competitive game was not terminated properly. When a packet cannot be transmitted, it means that the packet cannot be physically sent out from the game machine. Thus, it can be determined that the LAN cable is pulled out.
(B) In the aforementioned examples, the case where the game machine 2a and the game machine 2b that are installed in the different facilities play against each other is given as an example, but the present invention is also applicable to a case where the game machine 2a and the game machine 2a' that are installed in the same facility play against each other. The present invention is also applicable to a case where the player plays against the CPU or a game with no opponent player is executed at the game machine 2. Furthermore, the present invention is applicable to a case where a plurality of players play the same game on one game machine 2.
   Here, an example of the game with no opponent player may be a music game in which an input is made with an input device that is made to look like an instrument according to the timing that the game specifies.
(C) The present invention includes a computer program for causing a computer to execute the above method, and a computer readable recording medium on which such program is recorded. Examples of the recording medium include a computer readable flexible disk, hard disk, semiconductor memory, CD-ROM, DVD, magneto optical disk (MO) and the like.

### GENERAL INTERPRETATION OF TERMS

In understanding the scope of the present invention, the term "configured" as used herein to describe a component, section or part of a device includes hardware and/or software that is constructed and/or programmed to carry out the desired function. In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part,'' "section,'' "portion," "member" or "element" when used in the singular can have the dual meaning of a single part or a plurality of parts.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. An unauthorized conduct prevention method performed by a game machine that executes a competitive game, the method comprising:
accepting an input of a player identifier that identifies a player who operates the game machine;
detecting, for each player identifier, an abnormal count that indicates the total number of times that the competitive game was not terminated properly at the game machine; and generating an error signal based on the abnormal count.

2. The unauthorized conduct prevention method according to claim 1, wherein
the generating of the error signal determines whether or not the abnormal count has exceeded a predetermined maximum value and, if it has, generates the error signal.

3. The unauthorized conduct prevention method according to claim 1, further comprising
outputting an error notification based on the error signal generated in the error signal generation step.

4. The unauthorized conduct prevention method according to claim 3, further comprising
processing an error based on the error signal by forbidding an execution of the competitive game.

5. The unauthorized conduct prevention method according to claim 1, wherein
the game machine is connected to a host,
the detecting the abnormal count acquires a start count and an end count from the host that correspond to the accepted player identifier, the detecting the abnormal count calculates the abnormal count by computing a difference between the acquired start count and end count,
the start count indicates the total number of times that a player identified by the player identifier started the competitive game, and
the end count indicates the total number of times that the player identified by the player identifier terminated the competitive game properly.

6. The unauthorized conduct prevention method according to claim 5, further comprising requesting the host to increment the start count corresponding to the player identifier upon starting an execution of the competitive game; and
requesting the host to increment the end count corresponding to the player identifier after the competitive game is terminated properly.

7. The unauthorized conduct prevention method according to claim 6, wherein
the generation of the error signal transmits a reset request to the host to reset the start count and the end count after the error signal is generated.

8. The unauthorized conduct prevention method according to claim 1, wherein
the game machine is connected to a host, and
the detecting the abnormal count acquires from the host the abnormal count corresponding to the accepted player identifier.

9. The unauthorized conduct prevention method according to claim 8, further comprising detecting a player identifier of a player who did not terminate the competitive game properly in a previous operation of the game machine; and
requesting the host to update the abnormal count corresponding to the detected player identifier.

10. The unauthorized conduct prevention method according to claim 9, further comprising writing game information regarding the competitive game and the player identifier into a nonvolatile memory area of the game machine,
deleting the game information and the player identifier that are written in the nonvolatile memory area when the competitive game is terminated properly, and
searching the player identifier corresponding to the game information in the nonvolatile memory area when the game machine is started.

11. The unauthorized conduct prevention method according to claim 10, wherein
the requesting the host to update the abnormal count determines whether or not to request the host to update the abnormal count corresponding to the player identifier based on the searched game information.

12. The unauthorized conduct prevention method according to claim 9, wherein
the generating of the error signal requests the host to reset the abnormal count corresponding to the player identifier accepted in the identification step after the error signal is generated.

13. A game machine for executing a competitive game comprising:
an identification unit configured to accept an input of a player identifier that identifies a player;
an abnormal count detection unit configured to detect, for each player identifier, an abnormal count that indicates the total number of times that the online competitive game was not terminated properly; and
an error signal generation unit configured to generate an error signal based on the abnormal count.

14. A computer readable medium encoded with a computer program for preventing unauthorized conduct in a competitive game, the program instructing a game machine to perform the steps comprising:
accepting an input of a player identifier that identifies a player who operates the game machine;
detecting, for each player identifier, an abnormal count that indicates the total number of times that the competitive game was not terminated properly at the game machine; and
generating an error signal based on the abnormal count.
